# EUROPEAN PATENT APPLICATION

(11) **EP 0 568 171 A1**
(43) Date of publication of application: **03.11.1993**
(21) Application number: 93250115.8
(22) Date of filing: 20.04.1993
(51) Int. Cl.: C02F 5/12

(54) **Calcium carbonate antiprecipitating agents**

(30) Priority: 27.04.1992 US 873864
(71) Applicant: W.R. Grace & Co.-Conn., New York, New York 10036 (US)
(72) Inventor: Thevissen, Peter, B-2040 Herent (BE); Hwa, Chih Ming, Palatine, Ill.60067 (US); Colman, Ivan, B-920 Hamme (BE); Fan, Lai-Duien, Lake Zurich, Illinois 60047 (US)
(74) Representative: UEXKÜLL & STOLBERG

(57) **Abstract**

A method for inhibiting or preventing the precipitation of calcium carbonate in aqueous systems containing at least 5 ppm of magnesium ions comprising adding to the system, in an amount effective to inhibit the precipitation of calcium carbonate, a water-soluble copolymer having a polymer chain structure which comprises monomeric units of t-butyl acrylamide and units having the following formula: 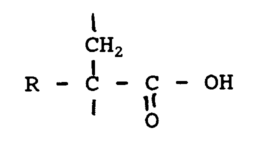
wherein R is of the class consisting of H and CH₃; or its water-soluble salts.

## Description

### FIELD OF THE INVENTION

This invention relates to a method for preventing or inhibiting the precipitation of calcium carbonate in aqueous systems and more particularly to a method for preventing the precipitation of calcium carbonate in aqueous systems which contain a relatively high concentration of magnesium ions.

### BACKGROUND OF THE INVENTION

Calcium carbonate precipitation is a common problem in industrial aqueous systems due to the low solubility of calcium carbonate in water, particularly in water having an elevated pH. Polyphosphates and organophosphonates have been used for stabilizing calcium carbonate in aqueous systems. However, these compounds contain phosphorus which is environmentally unacceptable since sufficiently high levels of phosphorus in the effluent stream may serve as a nutrient to aquatic life. Under high system water temperatures or long holding times, polyphosphates tend to hydrolyze to orthophosphate. The limited solubility of calcium orthophosphate, which is likely to form, makes it difficult to maintain adequate concentrations of phosphates in many instances. This reversion process can also create sludge formation problems in the aqueous system. For these reasons, the use of the polyphosphates and organophosphonates heretofore for inhibiting the precipitation of calcium carbonate have not been completely satisfactory.

### SUMMARY OF THE INVENTION

It is an object of this invention to provide a method for inhibiting or preventing the precipitation of calcium carbonate in aqueous systems.

It is another object of this invention to provide a method for inhibiting or preventing the precipitation of calcium carbonate in aqueous systems having a relatively high concentration of magnesium ions.

In accordance with the present invention there has been provided a method for inhibiting or preventing the precipitation of calcium carbonate in aqueous systems which contain magnesium ions which comprises adding to the system, in an amount effective to inhibit or prevent the precipitation of calcium carbonate, a copolymer of (meth)acrylic acid and t-butyl acrylamide.

### DETAILED DESCRIPTION

The present invention is directed to a novel method of inhibiting or preventing the precipitation of calcium carbonate in aqueous systems which contain a relatively high concentration of magnesium ions. For purposes of this invention, the terminology "relatively high concentration of magnesium ions" means a concentration greater than about 5 ppm. The method involves adding to the system a water-soluble copolymer having a polymer chain structure which comprises monomeric units of t-butyl acrylamide and units having the following formula: 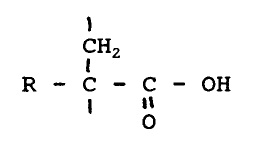
wherein R is selected from the group consisting of H and CH₃; or its water-soluble salts, in an amount effective to inhibit or prevent the precipitation of the calcium carbonate.

The exact dosage amount required with respect to a particular system can vary widely depending on the nature of the system and the amount of calcium carbonate contained therein. In general, however, the copolymers of this invention are added in very small amounts, typically in the range of from 0.1 ppm to 1000 ppm, preferably in the range 0.5 to 500 ppm and most preferably in the range of from 1 ppm to 10 ppm. Those of ordinary skill in the art can readily determine the appropriate dosage for a particular aqueous system in a conventional manner.

The copolymers of this invention are particularly suitable for use in aqueous systems having a high degree of hardness and have exhibited a high degree of insensitivity to relatively high concentrations of both magnesium and calcium. It is considered an important feature of this invention, that the claimed copolymers be magnesium insensitive. As described more fully in the following examples, the copolymers of this invention effectively inhibited the precipitation of calcium carbonate in aqueous systems having a relatively high concentration of magnesium ions. This was surprising and unexpected, particularly in view of the ineffectiveness of several structurally similar copolymers.

The aqueous systems which may be advantageously treated in accordance with the polymers of this invention include, but are not limited to cooling water systems such as e.g. cooling towers, desalinization units, gas scrubbers, as well as to boiler systems and other recirculating water systems where scale deposits are known to form.

The polymers of this invention may be used in combination with other water treatment components customarily employed in the aqueous system including, but not limited to other scale inhibitors, corrosion inhibitors, biocides, dispersing agents, antifoaming agents, oxygen scavengers, sequestering agents, and the like and mixtures thereof.

The polymeric scale inhibitors of this invention may be added to the system by any convenient mode, such as by first forming a concentrated aqueous solution of the copolymer of acrylic acid and t-butyl acrylamide or their water soluble salts, preferably containing between 1 and 50 total weight percent of the polymer, and then feeding the concentrated aqueous solution to the aqueous system at some convenient point. In many instances the scale inhibitors may be added to the make-up or feedwater lines through which water enters the system. Typically, an injector calibrated to deliver a predetermined amount periodically or continuously to the makeup water is employed.

Without further elaboration, it is believed that one skilled in the art, using the preceding detailed description can utilize the present invention to its fullest extent.

The following examples are provided to illustrate the invention in accordance with the principles of this invention, but are not to be construed as limiting the invention in any way except as indicated in the appended claims. All parts and percentages are by weight unless otherwise indicated.

### Example 1

The ability of copolymers of (meth)acrylic acid and t-butyl acrylamide to inhibit calcium carbonate precipitation was measured using a magnesium-free water. In this test 800 ml of a test solution containing 1,000 ppm calcium and 328 ppm bicarbonate (both as CaCO₃) in a 1,000 ml beaker was stirred with magnetic stir bar and heated using a stainless steel immersion heater to 49°C. The pH was monitored during heating and kept at pH 7.15 with addition of dilute HC1. After the temperature of 49°C was achieved, 0.1 N NaOH was added to the test solution at a rate of 0.32 ml/min using a syringe pump and the rise in pH was monitored. A decrease or plateau in the rate of pH increase is observed when calcium carbonate starts to precipitate, and the pH at which this decrease or plateau is observed is termed the critical pH. The critical pH for the test solution is shown in Table 1 below along with the total milliequivalents per liter of hydroxide (as NaOH) added to reach the critical pH.

The procedure was repeated using test solutions to which 5 ppm of the respective treatment was added. The results are shown in Table 1.

**TABLE 1**

| Run | Additive | Critical pH | NaOH added to reach critical pH (meq/l) |
|---|---|---|---|
| 1 | Blank (without treatment) | 7.69 | 0.48 |
| 2 | Sodium tripolyphosphate | 8.48 | 1.61 |
| 3 | Sodium hexameta-phosphate | 8.34 | 1.43 |
| 4 | Hydroxyethylidene diphosphonic acid | 8.54 | 1.63 |
| 5 | 2-Phosphonobutane-1,2,4-tricarboxylic acid | 8.74 | 1.96 |
| 6 | Copolymer of acrylic acid and t-butyl acrylamide | 8.48 | 1.56 |
| 7 | Copolymer of acrylic acid and hydroxyethyl acrylamide | 8.48 | 1.19 |
| 8 | Copolymer of acrylic acid and diacetone acrylamide | 8.43 | 1.36 |

As shown in Table 1, use of the copolymer of acrylic acid and t-butyl acrylamide raised the critical pH and resulted in more sodium hydroxide addition before the critical pH was reached, when compared to a blank run without treatment. However, the copolymer of acrylic acid and t-butyl acrylamide was considerably less effective than 2-phosphonobutane-1,2,4-tricarboxylic acid, which is a commonly used calcium carbonate antiprecipitating agent, in the magnesium-free water.

### Example 2

The usefulness of the copolymers of the invention to inhibit calcium carbonate precipitation was further measured using a magnesium-containing water at 54°C. The test water contains 283 ppm calcium, 184 ppm magnesium, and 423 ppm bicarbonate (all as CaCO₃). The treatments were dosed at 5 ppm. Table 2 summarizes the results.

**TABLE 2**

| Run | Additive | Critical pH | NaOH added to reach critical pH (meq/l) |
|---|---|---|---|
| 9 | Blank (without treatment) | 8.12 | 0.91 |
| 10 | Hydroxyethylidene diphosphonic acid | 9.52 | 4.10 |
| 11 | 2-Phosphonobutane-1,2,4-tricarboxylic acid | 9.55 | 4.19 |
| 12 | Copolymer of acrylic acid and t-butyl acrylamide | 9.98 | 6.30 |
| 13 | Copolymer of acrylic acid and methylol acrylamide | 9.08 | 2.38 |
| 14 | Copolymer of acrylic acid and hydroxyethyl acrylamide | 9.18 | 2.07 |

It can be seen from Table 2 that copolymers of (meth)acrylic acid and t-butyl acrylamide were very effective in preventing the precipitation of calcium carbonate. These copolymers outperformed all other additives tested including 2-phosphonobutane-1,2,4-tricarboxylic acid when the magnesium ions were present in the test water.

### Example 3

The effectiveness of the copolymers of this invention to control calcium carbonate precipitation was again evaluated using a magnesium-containing water at 54°C. The test water contains 283 ppm calcium, 184 ppm magnesium, and 423 ppm bicarbonate (all as CaCO₃). The additives were tested at 2.5 ppm. The results are tabulated in Table 3.

**TABLE 3**

| Run | Additive | Critical pH | NaOH added to reach critical pH (meq/l) |
|---|---|---|---|
| 15 | Blank (without treatment) | 8.12 | 0.91 |
| 16 | Hydroxyethylidene diphosphonic acid | 9.40 | 3.49 |
| 17 | 2-Phosphonobutane-1,2,4-tricarboxylic acid | 9.13 | 2.86 |
| 18 | Copolymer of acrylic acid and t-butyl acrylamide | 9.97 | 6.16 |
| 19 | Copolymer of acrylic acid and methylol acrylamide | 8.93 | 1.94 |
| 20 | Copolymer of acrylic acid and hydroxyethyl acrylamide | 8.90 | 1.70 |
| 21 | Copolymer of acrylic acid and diacetone acrylamide | 8.92 | 2.22 |

As shown in Table 3, the copolymer of acrylic acid and t-butyl acrylamide was a superior treatment in inhibiting the precipitation of calcium carbonate in an aqueous system. In the test water containing magnesium ion, the copolymer of acrylic acid and t-butyl acrylamide was vastly more effective than all other additives tested at low dosage levels.

Unlike the copolymer of acrylic acid and t-butyl acrylamide, the copolymer of acrylic acid and methylol acrylamide, the copolymer of acrylic acid and hydroxyethyl acrylamide, and the copolymer of acrylic acid and diacetone acrylamide were relatively ineffective in preventing the precipitation of calcium carbonate when the magnesium ion was present in the test water.

## Claims

1. A method for inhibiting or preventing the precipitation of calcium carbonate in aqueous systems containing at least 5 ppm of magnesium ions comprising adding to the system, in an amount effective to inhibit the precipitation of calcium carbonate, a water-soluble copolymer having a polymer chain structure which comprises monomeric units of t-butyl acrylamide and units having the following formula: 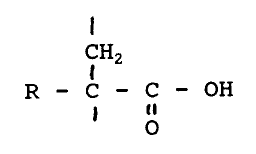 wherein R is of the class consisting of H and CH₃; or its water-soluble salts.

2. A method according to Claim 1 wherein the copolymer is a copolymer of acrylic acid and t-butyl acrylamide.

3. A method according to Claim 1 wherein the copolymer is a copolymer of sodium acrylate and t-butyl acrylamide.

4. A method according to Claim 1 wherein the copolymer is a copolymer of methacrylic acid and t-butyl acrylamide.

5. A method according to Claim 1 wherein the copolymer is a copolymer of sodium methacrylate and t-butyl acrylamide.

6. A method according to claim 1 wherein the effective amount is in the range of from 0.1 to 1000 ppm.

7. A method according to claim 1 wherein the effective amount is in the range of from 0.5 to 500 ppm.

8. A method according to claim 1 wherein the effective amount is in the range of from 1 to 10 ppm.
